# EUROPEAN PATENT APPLICATION

(11) **EP 4 011 209 A1**
(43) Date of publication of application: **15.06.2022**
(21) Application number: 20213679.2
(22) Date of filing: 14.12.2020
(51) Int. Cl.: A01N 43/40, A01N 43/56, A01N 43/653, A01N 25/04, A01N 25/30, A01P 3/00

(54) **STORAGE STABLE AQUEOUS SUSPENSION CONCENTRATES**

(71) Applicant: Bayer Aktiengesellschaft, 51371 Leverkusen (DE); Bayer Vapi Private Limited, Thane (West), Maharashtra 400607 (IN)
(72) Inventor: The designation of the inventor has not yet been filed
(74) Representative: BIP Patents

(57) **Abstract**

The disclosure provides for agrochemical compositions comprising a succinate dehydrogenase inhibitor, a DMI fungicide storage stable aqueous suspension concentrates. The disclosure further provides for methods of reducing crystal growth in agriculturally-active compounds in an agrochemical composition. In yet a further aspect, the disclosure provides for methods of utilizing an agrochemical composition to control diseases in a plant or crop.

## Description

### Storage stable aqueous suspension concentrates

The invention provides agrochemical aqueous suspension concentrate compositions that include fungicidal active ingredients suspended in water.

### BACKGROUND

There is an ongoing need to develop effective pesticidal formulations, such as herbicidal, fungicidal, insecticidal, herbicidal, and nematicidal formulations, which exhibit desired characteristics, including having improved storage stability and shelf life.

Storage stability of agrochemical compositions can be adversely affected by numerous chemical and physical phenomena that provoke crystal growth e.g. known as Ostwald ripening.

Crystal growth of compounds, including agriculturally active compounds in agrochemical, such as pesticidal, compositions can result in undesirable properties. For example, a lack of efficacy of the pesticide, a need for increased dosage of the pesticide, non-optimal concentrations of the active in the formulation, decreased shelf-life of the formulation, and/or blockages in filters and nozzles used for application when the formulation is applied.

Crystal growth can occur by either of two mechanisms: (1) slow diffusion, and/or (2) slow attachment. The rate of crystal/particle growth is determined by the slower process.

Additionally, Ostwald ripening can be accelerated by temperature cycling.

There is a need to provide formulations of agriculturally active ingredients suspended in water that do not undergo Ostwald ripening or have reduced or slower occurrence of this phenomenon. There is also an ongoing need to increase shelf life of agricultural formulations. Further, there is always a need to increase bioavailability of the active ingredient in formulations, e.g. by increased penetration.

WO 2017/121695 describes the combination of herbicides with carriers to prevent agglomeration and improve redispersibility. US Prov. 62/676518 describes the use of Fluopyram and Isoflucypram in combination with hydroxypropylmethylcelluose ether (HPMC) in aqueous suspension concentrates.

WO 2015/124330 describes the use of Hydroxypropylmethylcellulose ether (HPMC) in combination with xanthan gum or other polysaccharides to provide storage stable aqueous fungicidal suspension concentrates.

However, none of these documents describes the combination of an azol type fungicide such as Difenoconazole with a succinate dehydrogenase inhibitor ("SDHI") inhibitor such as Fluopyram or Isoflucypram in combination with a penetration enhancer. Furthermore, the mixture of such fungicides decreases the melting point of the corresponding active ingredients.

In particular, the mixtures of Difenoconazole and Fluopyram as well as Difenoconazole and Isoflucypram have a melting point of 65°C only, which makes it very challenging to have crystal growth stable aqueous suspension concentrates as the tendency of crystal growth increases with reduced melting points of the active ingredients and their respective mixtures. The melting point was measured with a Mettler DTA (open, nitrogen purged on aluminium, 160 µL high) with a heating cycle of 3 K/min, from 30 to 450°C at a nitrogen flow of 80 mL/min. The weight ratio was 1:1 for Difenoconazole:Isoflucypram and 1:2 for Difenoconazole:Fluopyram.

Another object of the present invention was also to include a penetration enhancer into the formulation. While these enhancers provide faster uptake of the active ingredients at higher concentrations without or with minimum loss of the active ingredient from the plant surface through physical wash off or bounce effects , however, these penetration enhancers not only swell the wax layers of the plant leaf, but also they do solubilize the active ingredients in the formulation so that the crystal growth behavior is further increased as solubilization of the active ingredient takes place.

A further object of the present invention was to provide a formulation in which crystal growth of DMIs as well as SDHIs in mixture formulations is prevented or significantly reduced.

The DMI (Demethylation Inhibitors) or Sterol Biosynthesis Inhibiting (SBI's) fungicides belong to FRAC code 3 which include the triazoles and imidazoles. DMI's work by inhibiting the biosynthesis of ergosterol which is a major component of the plasma membrane of certain fungi and needed for fungal growth. Resistance by fungi to the DMI fungicides has been characterized and is generally known to be controlled by the accumulation of several independent mutations, or what is known as 'continuous selection' or 'shifting', in the fungus.

Therefore, in a preferred embodiment DMI and SDHI (succinate dehydrogenase inhibitor) in combination as aqueous suspension concentrates are used. None of these above discussed documents describe the use of DMI and SDHI aqueous formulations that reduce crystal growth with low melting active ingredient combinations, in particular not without using hydroxypropylmethyl cellulose, while also preferably using penetration enhancers in the formulation.

In one embodiment the penetration enhancer is mandatory.

In one embodiment of the instant invention, agrochemical compositions of the present invention comprise at least one DMI and at least one succinate dehydrogenase inhibitor ("SDHI" / FRAC Class C2) as an active ingredient. Succinate dehydrogenase ("SDH") is an enzyme complex found in the inner mitochondrial membrane of eukaryotes, as well as in many bacterial cells. SDH participates in both the citric acid cycle and the electron transport chain. In the citric acid cycle, SDH catalyzes oxidation of succinate to fumarate by coupling it with reduction of ubiquinone to ubiquinol. This catalysis occurs in the inner mitochondrial membrane.

In pesticidal and other agrochemical compositions such as suspensions, crystal growth of the active component can result in a thicker, more viscous composition. In Fluopyram suspension concentrate formulations, for example, long, needle-like crystals have been observed, resulting in solidification of the suspension concentrate formulations during shelf storage concentrations. Moreover, the needles or sediments tend to clog nozzles and pipes, which presents a problem during application.

In Difenoconazole formulations and also other DMI based fungicides, rather flat crystals will be found that grow over time. Furthermore, these growing crystals tend to agglomerate with the grown needle like crystals of the SDHI. Thus it is a challenge to find non agglomerating recipes.

The present invention solves the above mentioned problems.

In particular, in one embodiment of the instant invention the combination of low melting DMI and SDHI suspended in water can be stabilized with regard to crystal growth, wherein in one embodiment said stabilization is achieved without using hydroxypropylmethyl cellulose (HPMC) as crystal growth inhibitor (also crystal growth inhibiting carrier).

In another aspect of the present invention, it is directed to a composition comprising at least one succinate dehydrogenase inhibitor, one DMI, one penetration enhancer and at least one crystal growth inhibitor.

In still another aspect of the present invention, it is directed to a composition comprising at least one succinate dehydrogenase inhibitor, one DMI, one penetration enhancer, at least on binder and at least one crystal growth inhibitor.

The invention is further directed to a method of controlling or reducing pests, including nematodes, insects, and fungal spores in a plant or crop comprising applying to a plant or habitat thereof a composition comprising above recipe.

Further objects, features, and advantages of the invention will become apparent from the detailed description that follows.

### DETAILED DESCRIPTION

Applicants have now found that agrochemical compositions of the present invention exhibit reduced crystal growth thereby increasing shelf life of the compositions, while also effectively controlling plant pests, such as insects, nematodes, and fungus and fungal spores, while at the same time the compositions show enhanced penetration / uptake properties.

"Controlling" denotes a preventive, treatment, or curative reduction of the damage in comparison to the untreated plant, more preferably the infestation is essentially repelled, most preferably the fungal, insects, and/or nematode infestation is totally suppressed. The application of the composition can be applied preventatively before fungal, insects or nematode, infestation and/or after infestation to cure or control infestation.

"Fungus" should be understood as meaning all species of fungi, as well as all fungus-like organisms, including oomycetes.

"Fungal spores" should be understood as meaning all spores produced by all species of fungi and fungus-like organisms, including oomycetes.

"Crystal growth" should be understood as meaning an increase in crystal or particle size in a fungicidal or other agrochemical composition, brought on as a result of Ostwald ripening or other phenomena.

In an aspect, the disclosure provides for compositions wherein crystal growth is inhibited such that the compositions are not gelled and remain free flowing at least 7 days, or at least 14 days, or at least 21 days or at least 28 days after manufacture and storage at elevated temp (i.e. 40°C and/or 45°C). In another aspect, the formulation should be stable and remain free flowing at least 6 months, or at least 1 year, or at least 2 years after manufacture under ambient storage conditions or room temperature, whereas room temperature in the instant application is 20°C if not otherwise specified.

In an aspect, the disclosure provides for compositions whose shelf-lives can extend to beyond 2 years or beyond 3 years or beyond five years without exhibiting significant crystal growth or sediment accumulation, and which maintain free flow.

In another aspect, the disclosure provides for a method of preventing, reducing, or eliminating crystal growth in a composition, such as a composition comprising one or more SDHIs as active ingredient(s), wherein at least one crystal growth inhibitor is added to the composition, one DMI and one penetration enhancer.

Therefore, object of the invention are agrochemical compositions comprising:
a) at least one SDHI fungicide,
b) at least one DMI fungicide,
c) at least one crystal growth inhibiting carrier c1) and optionally at least one further crystal growth inhibitor c2 and/or c3),
d) at least one ionic dispersant selected from sulfonates based on lignin and/or naphthalene as well as the polymeric condensates,
e) at least one further emulsifiers and/or dispersant being different from d),
f) at least one penetration enhancer,
g) optionally further additives such as colorants, thickener, defoamer, anti-freeze,
h) optionally further pesticides different from a) and b), and
i) water to 100%.

In one embodiment at least one crystal growth inhibiting carrier c1) and at least one crystal growth inhibiting carrier c2 is present in the composition.

In one embodiment at least one crystal growth inhibiting carrier c1) and at least one crystal growth inhibiting carrier c2) as well as at least one crystal growth inhibiting carrier c3) is present in the composition.

In one embodiment components g) and/ or i) are mandatory and not optional components.

In a preferred embodiment at least one component g) is a binder.
In a preferred embodiment the composition is free of HPMC as CGI c)

The SDHI(s) is most preferably selected from the group consisting of fluopyram and isoflucypram.

The DMI is most preferably Difenoconazole.
In one embodiment the combined melting point of compounds a) and b) is from 50-120°C, preferably from 50-90°C, more preferred from 55-80°C, even more preferred from 58-70°C, and most preferred from 59-68°C.

In another preferred embodiment the composition does not comprise any further pesticide.

Percentages - unless stated otherwise - should be regarded as percentages by weight, where the % by weight of the compositions add up to 100.

The proportions of the individual components which follow are each based on the total weight of the composition, where the proportion add up to 100% of the overall composition is made up by component i) (solvent).

The proportion of the SDHI fungicide a) in the compositions according to the invention is
preferably 2-80% by weight,
further preferably 5-50% by weight,
more preferred 8-35% by weight, and
most preferred 10-30 % by weight.

The proportion of the DMI fungicide b) in the compositions according to the invention is
preferably 2-50% by weight,
further preferably 3-35% by weight,
more preferred 5-25% by weight, and
most preferred 8-20 % by weight.

Furthermore, sum of a) and b) and optionally further pesticides is preferably from 15-80% by weight, more preferred from 20-70% by weight, and most preferred from 30-50% by weight.

The proportion of the crystal inhibiting carrier c1) in the compositions according to the invention is
preferably 0.1-10% by weight,
further preferably 0.2-8 % by weight,
more preferred 0.3-3 % by weight, and
most preferred 0.4 - 1.5 % by weight.
The proportion of the crystal inhibiting carrier c2) in the compositions according to the invention is preferably 0-10% by weight,
further preferably 0.1-8 % by weight,
more preferred 0.3-3 % by weight, and
most preferred 0.4 - 1.5 % by weight.
The proportion of the crystal inhibiting carrier c3) in the compositions according to the invention is preferably 0-10% by weight,
further preferably 0.05-3 % by weight,
more preferred 0.1-1 % by weight, and
most preferred 0.1 - 1.0 % by weight.

The proportion of the dispersant d) in the compositions according to the invention is
preferably 0.2-5% by weight,
further preferably 0.3-2.5 % by weight,
more preferred 0.7-2.0 % by weight, and
most preferred 0.8 - 2.0 % by weight.

The proportion of the one further emulsifiers and/or dispersant e) being different from d) in the compositions is
preferably 0.5-10% by weight,
further preferably 0.7-8 % by weight,
more preferred 1.5-5 % by weight, and
most preferred 2 - 4 % by weight.

The proportion of the penetration enhancer f) (component g) - if present - in the compositions according to the invention is
preferably 3-25 % by weight,
further preferably 4-15 % by weight,
more preferred 5-12 % by weight, and
most preferred 7-11 % by weight.

The proportion of the further additives g) - if present - in the compositions according to the invention is
preferably 0-12 by weight,
further preferably 0.1 - 10 % by weight,
more preferred 0.5-8 % by weight, and
most preferred 1-6 % by weight.

The proportion of the further pesticides h) - if present - if present - in the compositions according to the invention is
preferably 0-20 % by weight,
further preferably 5 - 15 % by weight,
more preferred 5-15 % by weight.

A preferred embodiment of the invention is compositions comprising components
a) 2-80 % by weight
b) 2-50 % by weight
c1) 0.1-10 % by weight
c2) 0.1-8 % by weight
d) 0.2-5 % by weight
e) 0.5-10 % by weight
f) 3-25 % by weight
g) 0-12 % by weight
h) 0-20 % by weight
i) to 100.
A further-preferred embodiment of the invention is compositions comprising components
a) 2-80% by weight
b) 2-50% by weight
c1) 0.1-10% by weight
c2) 0.1-8 % by weight
d) 0.2-5 % by weight
e) 0.5-10 % by weight
f) 3-25 % by weight
g) 0.1-10 % by weight
h) 0-15 % by weight
i) to 100.

A further-preferred embodiment of the invention is compositions comprising components
a) 2-80% by weight
b) 2-50% by weight
c1) 0.1-10% by weight
c2) 0.1-8 % by weight
c3) 0.05-3 % by weight
d) 0.2-5 % by weight
e) 0.5-10 % by weight
f) 3-25 % by weight
g) 0.5-8 % by weight
h) 0-15 % by weight
i) to 100.

An even further-preferred embodiment of the invention is compositions comprising components
a) 10-30% by weight
b) 8-20 % by weight
c1) 0.4-1.5% by weight
c2) 0.4-1.5 % by weight
d) 0.8-2 % by weight
e) 2-4 % by weight
f) 7-11 % by weight
g) 1-6 % by weight
h) 0-15 % by weight
i) to 100.

An even further-preferred embodiment of the invention is compositions comprising components
a) 10-30% by weight
b) 8-20 % by weight
c1) 0.4-1.5% by weight
c2) 0.4-1.5 % by weight
c3) 0.1-1 % by weight
d) 0.8-2 % by weight
e) 2-4 % by weight
f) 7-11 % by weight
g) 1-6 % by weight
h) 0-15 % by weight
i) to 100.

In the instant specification, in ranges of preference stated in the present invention, the different levels of preference should be understood such that they can be combined with one another in permutations, but in any case identical levels of preference and especially the most preferred embodiment/level of preference in each case are to be combined with one another and are indeed disclosed as such a combination. In particular preferred are always the combinations of the narrowest ranges. Compositions as described in the present application that consist solely of the essential components (not optional components) should likewise be considered to be disclosed.

SDHIs inhibit succinate dehydrogenase within the fungal mitochondrial chain, thereby inhibiting electron transport. SDHIs can be categorized as one of two classes: (1) inhibitors that bind in the succinate pocket, thereby preventing oxidation and (2) inhibitors that bind in the ubiquinone pocket, thereby preventing reduction. Fluopyram belongs to the class of ubiquinone-type inhibitors.

Fungicidal compounds classified as SDHIs (FRAC code 7) include benzamides, pyrazole-4-carboxamides, phenyl-benazmides, phenyl-oxo-ethyl thioprene amides, furan-carboxamides, oxathiin-carboxamides, thiazole-carboxamides, N-methoxy-(phenyl-ethyl)-pyrazole-carboxamides, pyridine-carboxamides, and pyrazine-carboxamides.

In particular the SDHI are selected from the group comprising (2.001) benzovindiflupyr, (2.002) bixafen, (2.003) boscalid, (2.004) carboxin, (2.005) fluopyram, (2.006) flutolanil, (2.007) fluxapyroxad, (2.008) furametpyr, (2.009) Isofetamid, (2.010) isopyrazam (anti-epimeric enantiomer 1R,4S,9S), (2.011) isopyrazam (anti-epimeric enantiomer 1S,4R,9R), (2.012) isopyrazam (anti-epimeric racemate 1RS,4SR,9SR), (2.013) isopyrazam (mixture of syn-epimeric racemate 1RS,4SR,9RS and anti-epimeric racemate 1RS,4SR,9SR), (2.014) isopyrazam (syn-epimeric enantiomer 1R,4S,9R), (2.015) isopyrazam (syn-epimeric enantiomer 1S,4R,9S), (2.016) isopyrazam (syn-epimeric racemate 1RS,4SR,9RS), (2.017) penflufen, (2.018) penthiopyrad, (2.019) pydiflumetofen, (2.020) Pyraziflumid, (2.021) sedaxane, (2.022) 1,3-dimethyl-N-(1,1,3-trimethyl-2,3-dihydro-1H-inden-4-yl)-1H-pyrazole-4-carboxamide, (2.023) 1,3-dimethyl-N-[(3R)-1,1,3-trimethyl-2,3-dihydro-1H-inden-4-yl]-1H-pyrazole-4-carboxamide, (2.024) 1,3-dimethyl-N-[(3S)-1,1,3-trimethyl-2,3-dihydro-1H-inden-4-yl]-1H-pyrazole-4-carboxamide, (2.025) 1-methyl-3-(trifluoromethyl)-N-[2'-(trifluoromethyl)biphenyl-2-yl]-1H-pyrazole-4-carboxamide, (2.026) 2-fluoro-6-(trifluoromethyl)-N-(1,1,3-trimethyl-2,3-dihydro-1H-inden-4-yl)benzamide, (2.027) 3-(difluoromethyl)-1-methyl-N-(1,1,3-trimethyl-2,3-dihydro-1H-inden-4-yl)-1H-pyrazole-4-carboxamide, (2.028) inpyrfluxam, (2.029) 3-(difluoromethyl)-1-methyl-N-[(3S)-1,1,3-trimethyl-2,3-dihydro-1H-inden-4-yl]-1H-pyrazole-4-carboxamide, (2.030) fluindapyr, (2.031) 3-(difluoromethyl)-N-[(3R)-7-fluoro-1,1,3-trimethyl-2,3-dihydro-1H-inden-4-yl]-1-methyl- 1H-pyrazole-4-carboxamide, (2.032) 3-(difluoromethyl)-N-[(3S)-7-fluoro-1,1,3-trimethyl-2,3-dihydro-1H-inden-4-yl]-1-methyl-1H-pyrazole-4-carboxamide, (2.033) 5,8-difluoro-N-[2-(2-fluoro-4-{[4-(trifluoromethyl)pyridin-2-yl]oxy}phenyl)ethyl]quinazolin-4-amine, (2.034) N-(2-cyclopentyl-5-fluorobenzyl)-N-cyclopropyl-3-(difluoromethyl)-5-fluoro-1-methyl-1H-pyrazole-4-carboxamide, (2.035) N-(2-tert-butyl-5-methylbenzyl)-N-cyclopropyl-3-(difluoromethyl)-5-fluoro-1-methyl-1H-pyrazole-4-carboxamide, (2.036) N-(2-tert-butylbenzyl)-N-cyclopropyl-3-(difluoromethyl)-5-fluoro-1-methyl-1H-pyrazole-4-carboxamide, (2.037) N-(5-chloro-2-ethylbenzyl)-N-cyclopropyl-3-(difluoromethyl)-5-fluoro-1-methyl-1H-pyrazole-4-carboxamide, (2.038) isoflucypram, (2.039) N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, (2.040) N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, (2.041) N-[1-(2,4-dichlorophenyl)-1-methoxypropan-2-yl]-3-(difluoromethyl)-1-methyl-1H-pyrazole-4-carboxamide, (2.042) N-[2-chloro-6-(trifluoromethyl)benzyl]-N-cyclopropyl-3-(difluoromethyl)-5-fluoro-1-methyl-1H-pyrazole-4-carboxamide, (2.043) N-[3-chloro-2-fluoro-6-(trifluoromethyl)benzyl]-N-cyclopropyl-3-(difluoromethyl)-5-fluoro-1-methyl-1H-pyrazole-4-carboxamide, (2.044) N-[5-chloro-2-(trifluoromethyl)benzyl]-N-cyclopropyl-3-(difluoromethyl)-5-fluoro-1-methyl-1H-pyrazole-4-carboxamide, (2.045) N-cyclopropyl-3-(difluoromethyl)-5-fluoro-1-methyl-N-[5-methyl-2-(trifluoromethyl)benzyl]-1H-pyrazole-4-carboxamide, (2.046) N-cyclopropyl-3-(difluoromethyl)-5-fluoro-N-(2-fluoro-6-isopropylbenzyl)-1-methyl-1H-pyrazole-4-carboxamide, (2.047) N-cyclopropyl-3-(difluoromethyl)-5-fluoro-N-(2-isopropyl-5-methylbenzyl)-1-methyl-1H-pyrazole-4-carboxamide, (2.048) N-cyclopropyl-3-(difluoromethyl)-5-fluoro-N-(2-isopropylbenzyl)-1-methyl-1H-pyrazole-4-carbothioamide, (2.049) N-cyclopropyl-3-(difluoromethyl)-5-fluoro-N-(2-isopropylbenzyl)-1-methyl-1H-pyrazole-4-carboxamide, (2.050) N-cyclopropyl-3-(difluoromethyl)-5-fluoro-N-(5-fluoro-2-isopropylbenzyl)-1-methyl-1H-pyrazole-4-carboxamide, (2.051) N-cyclopropyl-3-(difluoromethyl)-N-(2-ethyl-4,5-dimethylbenzyl)-5-fluoro-1-methyl-1H-pyrazole-4-carboxamide, (2.052) N-cyclopropyl-3-(difluoromethyl)-N-(2-ethyl-5-fluorobenzyl)-5-fluoro-1-methyl-1H-pyrazole-4-carboxamide, (2.053) N-cyclopropyl-3-(difluoromethyl)-N-(2-ethyl-5-methylbenzyl)-5-fluoro-1-methyl-1H-pyrazole-4-carboxamide, (2.054) N-cyclopropyl-N-(2-cyclopropyl-5-fluorobenzyl)-3-(difluoromethyl)-5-fluoro-1-methyl-1H-pyrazole-4-carboxamide, (2.055) N-cyclopropyl-N-(2-cyclopropyl-5-methylbenzyl)-3-(difluoromethyl)-5-fluoro-1-methyl-1H-pyrazole-4-carboxamide, (2.056) N-cyclopropyl-N-(2-cyclopropylbenzyl)-3 -(difluoromethyl)-5 -fluoro-1-methyl- 1H-pyrazole-4-carboxamide, (2.057) pyrapropoyne, (2.058) N-[rac-(1S,2S)-2-(2,4-dichlorophenyl)cyclobutyl]-2-(trifluoromethyl)nicotinamide, (2.059) N-[(1S,2S)-2-(2,4-dichlorophenyl)cyclobutyl]-2-(trifluoromethyl)nicotinam, and
(3.001) ametoctradin, (3.002) amisulbrom, (3.003) azoxystrobin, (3.004) coumethoxystrobin, (3.005) coumoxystrobin, (3.006) cyazofamid, (3.007) dimoxystrobin, (3.008) enoxastrobin, (3.009) famoxadone, (3.010) fenamidone, (3.011) flufenoxystrobin, (3.012) fluoxastrobin, (3.013) kresoxim-methyl, (3.014) metominostrobin, (3.015) orysastrobin, (3.016) picoxystrobin, (3.017) pyraclostrobin, (3.018) pyrametostrobin, (3.019) pyraoxystrobin, (3.020) trifloxystrobin, (3.021) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (3.022) (2E,3Z)-5-{[1-(4-chlorophenyl)-1H-pyrazol-3-yl]oxy}-2-(methoxyimino)-N,3-dimethylpent-3-enamide, (3.023) (2R)-2-{2-[(2,5-dimethylphenoxy)methyl]phenyl}-2-methoxy-N-methylacetamide, (3.024) (2S)-2-{2-[(2,5-dimethylphenoxy)methyl]phenyl}-2-methoxy-N-methylacetamide, (3.025) fenpicoxamid, (3.026) mandestrobin, (3.027) N-(3-ethyl-3,5,5-trimethylcyclohexyl)-3-formamido-2-hydroxybenzamide, (3.028) (2E,3Z)-5-{[1-(4-chloro-2-fluorophenyl)-1H-pyrazol-3-yl]oxy}-2-(methoxyimino)-N,3-dimethylpent-3-enamide, (3.029) methyl {5-[3-(2,4-dimethylphenyl)-1H-pyrazol-1-yl]-2-methylbenzyl}carbamate, (3.030) metyltetraprole, (3.031) florylpicoxamid.

In an embodiment, agrochemical compositions of the present invention comprise at least one benzamide compound. In a further, preferred embodiment, agrochemical compositions of the present invention comprise fluopyram.

Fluopyram's International Union of Pure and Applied Chemistry (IUPAC) name is N-[2-[3-chloro-5-(trifluoromethyl)pyridin-2-yl]ethyl]-2-(trifluoromethyl)benzamide. Fluopyram is written chemically as C₁₆H₁₁ClF₆N₂O.

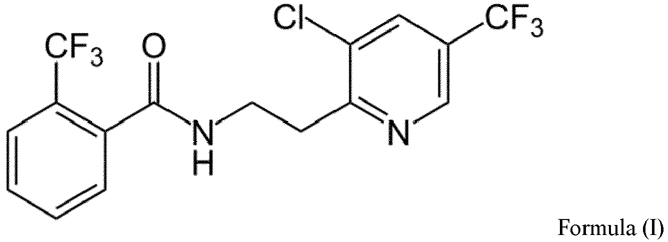

Fluopyram is a fungicidal and nematicidal benzamide compound characterized as a succinate dehydrogenase inhibitor ("SDHI"), belonging to Fungicide Resistance Action Committee ("FRAC") Mode of Action group C, FRAC code 7 (see: www.frac.info/docs/default-source/publications/frac-code-list/frac-code-list-2017-final.pdf). Specifically, fluopyram is a pyridinyl-ethyl-benzamide.

Additional fungicidal benzamide compounds include benzohydroxamic acid, fluopicolide, fluopimomide, tioxymid, trichlamide, zarilamid, and zoxamide.

In another embodiment, agrochemical compositions of the present invention comprise at least one pyrazole-4-carboxamide. In another, preferred embodiment, agrochemical compositions of the present invention comprise isoflucypram.

The compound isoflucypram is a fungicide from Bayer CropScience AG, the name for which was approved in March 2017 by the International Organization for Standardization ("ISO") Technical Committee ISO/TC 81 for common names for pesticides and other agrochemicals.

Isoflucypram's International Union of Pure and Applied Chemistry (IUPAC) name is N-(5-chloro-2-isopropylbenzyl)-N-cyclopropyl-3-(difluoromethyl)-5-fluoro-1-methyl-1H-pyrazole-4-carboxamide. Isoflucypram is written chemically as C₁₉H₂₁ClF₃N₃O.

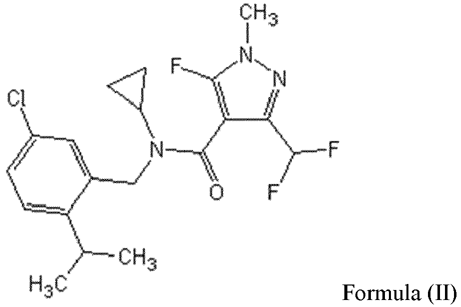

Isoflucypram is a pyrazole compound, specifically a pyrazole-4-carboxamide. Isoflucypram is thus characterized as a SDHI, belonging to FRAC Mode of Action group C, FRAC code 7.

Additional pesticidal pyrazole compounds include oxathiapiprolin, rabenzazole, fenpyrazamine, metyltetrapole, pyraclostrobin, pyrametostrobin, pyraoxystrobin, benzovindiflupyr, bixafen, fluindapyr, fluxapyroxad, furametpyr, inpyrfluxam, isopyrazam, penflufen, penthiopyrad, pydiflumetofen, and sedaxane.

In another preferred embodiment, agrochemical compositions of the present invention comprise fluopyram and/or isoflucypram.

Inhibitors of the ergosterol biosynthesis, for example (1.001) cyproconazole, (1.002) difenoconazole, (1.003) epoxiconazole, (1.004) fenhexamid, (1.005) fenpropidin, (1.006) fenpropimorph, (1.007) fenpyrazamine, (1.008) fluquinconazole, (1.009) flutriafol, (1.010) imazalil, (1.011) imazalil sulfate, (1.012) ipconazole, (1.013) metconazole, (1.014) myclobutanil, (1.015) paclobutrazol, (1.016) prochloraz, (1.017) propiconazole, (1.018) prothioconazole, (1.019) pyrisoxazole, (1.020) spiroxamine, (1.021) tebuconazole, (1.022) tetraconazole, (1.023) triadimenol, (1.024) tridemorph, (1.025) triticonazole, (1.026) (1R2S,5S)-5-(4-chlorobenzyl)-2-(chloromethyl)-2-methyl-1-(1H-1,2,4-triazol-1-ylmethyl)cyclopentanol, (1.027) (1S,2R,5R)-5 -(4-chlorobenzyl)-2-(chloromethyl)-2-methyl-1-(1H-1,2,4-triazol-1-ylmethyl)cyclopentanol, (1.028) (2R)-2-(1-chlorocyclopropyl)-4-[(1R)-2,2-dichlorocyclopropyl]-1-(1H-1,2,4-triazol-1-yl)butan-2-ol, (1.029) (2R)-2-(1-chlorocyclopropyl)-4-[(1S)-2,2-dichlorocyclopropyl]-1-(1H-1,2,4-triazol-1-yl)butan-2-ol, (1.030) (2R)-2-[4-(4-chlorophenoxy)-2-(trifluoromethyl)phenyl]-1-(1H-1,2,4-triazol-1-yl)propan-2-ol, (1.031) (2S)-2-(1-chlorocyclopropyl)-4-[(1R)-2,2-dichlorocyclopropyl]-1-(1H-1,2,4-triazol-1-yl)butan-2-ol, (1.032) (2S)-2-(1-chlorocyclopropyl)-4-[(1S)-2,2-dichlorocyclopropyl]-1-(1H-1,2,4-triazol-1-yl)butan-2-ol, (1.033) (2S)-2-[4-(4-chlorophenoxy)-2-(trifluoromethyl)phenyl]-1-(1H-1,2,4-triazol-1-yl)propan-2-ol, (1.034) (R)-[3-(4-chloro-2-fluorophenyl)-5-(2,4-difluorophenyl)-1,2-oxazol-4-yl](pyridin-3-yl)methanol, (1.035) (S)-[3-(4-chloro-2-fluorophenyl)-5-(2,4-difluorophenyl)-1,2-oxazol-4-yl](pyridin-3-yl)methanol, (1.036) [3-(4-chloro-2-fluorophenyl)-5-(2,4-difluorophenyl)-1,2-oxazol-4-yl](pyridin-3-yl)methanol, (1.037) 1-({(2R,4S)-2-[2-chloro-4-(4-chlorophenoxy)phenyl]-4-methyl-1,3-dioxolan-2-yl}methyl)-1H-1,2,4-triazole, (1.038) 1-({(2S,4S)-2-[2-chloro-4-(4-chlorophenoxy)phenyl]-4-methyl-1,3-dioxolan-2-yl}methyl)-1H-1,2,4-triazole, (1.039) 1-{[3-(2-chlorophenyl)-2-(2,4-difluorophenyl)oxiran-2-yl]methyl}-1H-1,2,4-triazol-5-yl thiocyanate, (1.040) 1-{[rel(2R,3R)-3-(2-chlorophenyl)-2-(2,4-difluorophenyl)oxiran-2-yl]methyl}-1H-1,2,4-triazol-5-yl thiocyanate, (1.041) 1-{[rel(2R,3S)-3-(2-chlorophenyl)-2-(2,4-difluorophenyl)oxiran-2-yl]methyl}-1H-1,2,4-triazol-5-ylthiocyanate, (1.042) 2-[(2R,4R,5R)-1-(2,4-dichlorophenyl)-5-hydroxy-2,6,6-trimethylheptan-4-yl]-2,4-dihydro-3H-1,2,4-triazole-3-thione, (1.043) 2-[(2R,4R,5S)-1-(2,4-dichlorophenyl)-5-hydroxy-2,6,6-trimethylheptan-4-yl]-2,4-dihydro-3H-1,2,4-triazole-3-thione, (1.044) 2-[(2R,4S,5R)-1-(2,4-dichlorophenyl)-5-hydroxy-2,6,6-trimethylheptan-4-yl]-2,4-dihydro-3H-1,2,4-triazole-3-thione, (1.045) 2-[(2R,4S,5S)-1-(2,4-dichlorophenyl)-5-hydroxy-2,6,6-trimethylheptan-4-yl]-2,4-dihydro-3H-1,2,4-triazole-3-thione, (1.046) 2-[(2S,4R,5R)-1-(2,4-dichlorophenyl)-5-hydroxy-2,6,6-trimethylheptan-4-yl]-2,4-dihydro-3H-1,2,4-triazole-3-thione, (1.047) 2-[(2S,4R,5S)-1-(2,4-dichlorophenyl)-5-hydroxy-2,6,6-trimethylheptan-4-yl]-2,4-dihydro-3H-1,2,4-triazole-3-thione, (1.048) 2-[(2S,4S,5R)-1-(2,4-dichlorophenyl)-5-hydroxy-2,6,6-trimethylheptan-4-yl]-2,4-dihydro-3H-1,2,4-triazole-3-thione, (1.049) 2-[(2S,4S,5S)-1-(2,4-dichlorophenyl)-5-hydroxy-2,6,6-trimethylheptan-4-yl]-2,4-dihydro-3H-1,2,4-triazole-3-thione, (1.050) 2-[1-(2,4-dichlorophenyl)-5-hydroxy-2,6,6-trimethylheptan-4-yl]-2,4-dihydro-3H-1,2,4-triazole-3-thione, (1.051) 2-[2-chloro-4-(2,4-dichlorophenoxy)phenyl]-1-(1H-1,2,4-triazol-1-yl)propan-2-ol, (1.052) 2-[2-chloro-4-(4-chlorophenoxy)phenyl]-1-(1H-1,2,4-triazol-1-yl)butan-2-ol, (1.053) 2-[4-(4-chlorophenoxy)-2-(trifluoromethyl)phenyl]-1-(1H-1,2,4-triazol-1-yl)butan-2-ol, (1.054) 2-[4-(4-chlorophenoxy)-2-(trifluoromethyl)phenyl]-1-(1H-1,2,4-triazol-1-yl)pentan-2-ol, (1.055) mefentrifluconazole, (1.056) 2-{[3-(2-chlorophenyl)-2-(2,4-difluorophenyl)oxiran-2-yl]methyl}-2,4-dihydro-3H-1,2,4-triazole-3-thione, (1.057) 2-{[rel(2R,3R)-3-(2-chlorophenyl)-2-(2,4-difluorophenyl)oxiran-2-yl]methyl}-2,4-dihydro-3H-1,2,4-triazole-3-thione, (1.058) 2-{[rel(2R,3S)-3-(2-chlorophenyl)-2-(2,4-difluorophenyl)oxiran-2-yl]methyl}-2,4-dihydro-3H-1,2,4-triazole-3-thione, (1.059) 5-(4-chlorobenzyl)-2-(chloromethyl)-2-methyl-1-(1H-1,2,4-triazol-1-ylmethyl)cyclopentanol, (1.060) 5 -(allylsulfanyl)-1-{[3 -(2-chlorophenyl)-2-(2,4-difluorophenyl)oxiran-2-yl]methyl}-1H-1,2,4-triazole, (1.061) 5-(allylsulfanyl)-1-{[rel(2R,3R)-3-(2-chlorophenyl)-2-(2,4-difluorophenyl)oxiran-2-yl]methyl}-1H-1,2,4-triazole, (1.062) 5-(allylsulfanyl)-1-{[rel(2R,3 S)-3 -(2-chlorophenyl)-2-(2,4-difluorophenyl)oxiran-2-yl]methyl}-1H-1,2,4-triazole, (1.063) N'-(2,5-dimethyl-4-{[3-(1,1,2,2-tetrafluoroethoxy)phenyl]sulfanyl}phenyl)-N-ethyl-N-methylimidoformamide, (1.064) N'-(2,5-dimethyl-4-{[3-(2,2,2-trifluoroethoxy)phenyl]sulfanyl}phenyl)-N-ethyl-N-methylimidoformamide, (1.065) N'-(2,5-dimethyl-4-{[3-(2,2,3,3-tetrafluoropropoxy)phenyl]sulfanyl}phenyl)-N-ethyl-N-methylimidoformamide, (1.066) N'-(2,5-dimethyl-4-{[3-(pentafluoroethoxy)phenyl]sulfanyl}phenyl)-N-ethyl-N-methylimidoformamide, (1.067) N'-(2,5-dimethyl-4-{3-[(1,1,2,2-tetrafluoroethyl)sulfanyl]phenoxy}phenyl)-N-ethyl-N-methylimidoformamide, (1.068) N'-(2,5-dimethyl-4-{3-[(2,2,2-trifluoroethyl)sulfanyl]phenoxy}phenyl)-N-ethyl-N-methylimidoformamide, (1.069) N'-(2,5-dimethyl-4-{3-[(2,2,3,3-tetrafluoropropyl)sulfanyl]phenoxy}phenyl)-N-ethyl-N-methylimidoformamide, (1.070) N'-(2,5-dimethyl-4-{3-[(pentafluoroethyl)sulfanyl]phenoxy}phenyl)-N-ethyl-N-methylimidoformamide, (1.071) N'-(2,5-dimethyl-4-phenoxyphenyl)-N-ethyl-N-methylimidoformamide, (1.072) N'-(4-{[3-(difluoromethoxy)phenyl]sulfanyl}-2,5-dimethylphenyl)-N-ethyl-N-methylimidoformamide, (1.073) N'-(4-{3-[(difluoromethyl)sulfanyl]phenoxy} -2,5-dimethylphenyl)-N-ethyl-N-methylimidoformamide, (1.074) N'-[5-bromo-6-(2,3-dihydro-1H-inden-2-yloxy)-2-methylpyridin-3-yl]-N-ethyl-N-methylimidoformamide, (1.075) N'-{4-[(4,5-dichloro-1,3-thiazol-2-yl)oxy]-2,5-dimethylphenyl}-N-ethyl-N-methylimidoformamide, (1.076) N'-{5-bromo-6-[(1R)-1-(3,5-difluorophenyl)ethoxy]-2-methylpyridin-3-yl}-N-ethyl-N-methylimidoformamide, (1.077) N'-{5-bromo-6-[(1S)-1-(3,5-difluorophenyl)ethoxy]-2-methylpyridin-3-yl}-N-ethyl-N-methylimidoformamide, (1.078) N'-{5-bromo-6-[(cis-4-isopropylcyclohexyl)oxy]-2-methylpyridin-3-yl}-N-ethyl-N-methylimidoformamide, (1.079) N'-{5-bromo-6-[(trans-4-isopropylcyclohexyl)oxy]-2-methylpyridin-3-yl}-N-ethyl-N-methylimidoformamide, (1.080) N'-{5-bromo-6-[1-(3,5-difluorophenyl)ethoxy]-2-methylpyridin-3-yl}-N-ethyl-N-methylimidoformamide, (1.081) ipfentrifluconazole, (1.082) 2-[4-(4-chlorophenoxy)-2-(trifluoromethyl)phenyl]-1-(1H-1,2,4-triazol-1-yl)propan-2-ol, (1.083) 2-[6-(4-bromophenoxy)-2-(trifluoromethyl)-3-pyridyl]-1-(1,2,4-triazol-1-yl)propan-2-ol, (1.084) 2-[6-(4-chlorophenoxy)-2-(trifluoromethyl)-3-pyridyl]-1-(1,2,4-triazol-1-yl)propan-2-ol, (1.085) 3-[2-(1-chlorocyclopropyl)-3-(3-chloro-2-fluoro-phenyl)-2-hydroxy-propyl]imidazole-4-carbonitrile, (1.086) 4-[[6-[rac-(2R)-2-(2,4-difluorophenyl)-1,1-difluoro-2-hydroxy-3-(5-thioxo-4H-1,2,4-triazol-1-yl)propyl]-3-pyridyl]oxy]benzonitrile, (1.087) N-isopropyl-N'-[5-methoxy-2-methyl-4-(2,2,2-trifluoro-1-hydroxy-1-phenylethyl)phenyl]-N-methylimidoformamide, (1.088) N'-{5-bromo-2-methyl-6-[(1-propoxypropan-2-yl)oxy]pyridin-3-yl}-N-ethyl-N-methylimidoformamide, (1.089) hexaconazole, (1.090) penconazole, (1.091) fenbuconazole.Preferred is difenoconazole and especially preferred the combination of difenoconazole and the SDHI fluopyram.

In a preferred embodiment the compounds a) and b) are present in a ratio of 4: 1 to 1:2, preferably 3:1 to 1:1, more preferred in a ratio of 2:1 to 1:1 and most preferably in a ratio of 2:1.

The crystal inhibiting carriers c1) are selected from the group consisting of of clays, minerals and synthetic silicas. Clays are based on carbonate, sulfate, phosphate and silicate from earthalkali and alkali methals. Typical is kaolin, silicate, silica acids, as Agsorb^{®} LVM^{®}-GA (Attapulgit), Harborlite^{®} 300 (Perlit), Collys^{®} HV, Omya^{®} (Calciumcarbonat), Kaolin^{®} Tec 1 (Kaolin, Aluminiumhydrosilicat), Steamic^{®} OOS (Talk, Magnesiumsilicat), Steamic^{®} OOS (Talk, Magnesiumsilicat), bentonite, hectorite, attapulgite, Montmorillonite, Smektite and other silicate materials such as bentone (Elementis), Attagel^{®} (Engelhard), Agsorb^{®} (Oil-Dri Corporation) or Hectorite^{®} (Akzo Nobel) or Van Gel-Reihe (R.T. Vanderbilt). Especially preferred are highly dispers silica acids (pyrogene and precipitated) such as Sipernat and Aerosil types from Evonik.

Crystal inhibing carriers c2) are polymeric crystal growth inhibitors, selected from the group of polymeric surfactants or a combination of polymeric surfactants. Suitable polymeric surfactants include, for example, polycarboxylates, acrylic copolymers, fatty alcohol ethoxylate, castor-oil based ethoxylates, fatty acid ethoxylates, EO-PO block copolymers (i.e., poloxamers), sorbitan(ol) ester ethoxylates, lanolin alcohol ethoxylates, polyol esters, lanolin alcohols, oleine/oleic fatty acids, vegetable and tallow fatty acids, and lanolin fatty acids. Examples of polymeric surfactants also include homo- or copolymers of vinylpyrrolidone, vinylalcohols, or vinylacetates. Preferably c2) is selected from the group of polycarboxylate dispersants.

As crystal inhibitor carrier c3) any known cellulose ether can be used as a crystal growth inhibitor of the present invention. Cellulose ethers are generally known compounds that are commercially available, for example, as Methocel^{®} from Dow Chemical Company, or as Culminal^{®} from Hercules. They may be prepared by etherification of the polysaccharide cellulose. The manufacturing process may be carried out in either one of several steps. The reactions usually taking place are alkalization and alkylation. These reactions can be carried out in the presence or absence of solvents. Pure cellulose has large crystalline regions due to hydrogen- bonded hydroxyl groups and is thus insoluble in water and in most organic solvents. In the first step of cellulose ether manufacturing, cellulose may be activated with sodium hydroxide to become alkali cellulose. In some processes, alkali cellulose is degraded oxidatively much more rapidly than cellulose. Controlled reduction of the degree of polymerization allows for adjustment of the solution viscosities of the final products. By the selection of the substituent, the type of cellulose ether is determined. Mixed ethers can be produced with a mixture of reactants or by stepwise addition of the substituents. This reaction step may be carried out under pressure and at increased temperature. Alkylation may be carried out with alkyl halides. With epoxides, the process is called alkoxylation. As with all polymer reactions, this reaction may not occur uniformly along the polymer chain.

The cellulose ether can be methylhydroxyethyl cellulose or hydroxypropyl methylcellulose. In an aspect, the cellulose ether is hydroxypropyl methylcellulose. The cellulose ether may have solubility in water at 20 °C of at least 3 g/l, preferably of at least 10g/l, and in particular of at least 20 g/l. The molecular weight of cellulose ether is usually determined by kinematic or dynamic viscosity. Lower viscosities mean typically lower molecular weight of the cellulose ether. In certain embodiments, the cellulose ether is, Methocel^{®} K200M Premium Hydroxypropyl Methylcellulose from Dow Chemical Company. In another embodiment, the cellulose ether is Methocel E15 Premium from Dow Chemical Company.

Dispersant d) is selected from the group of sulfonates based on Naphthalin and/or Lignin. Examples are Galoryl^{®} MT 800 (sodium dibutyl naphthalene sulfonate), Morwet^{®} IP (Diisopropylnaphthalinsulfonat) and Nekal^{®} BX (alkylnaphthalenesulfonate). Salts of alkylnaphthalenesulphonic acids, salts of alkylnaphthalenesulphonic acid-formaldehyde condensation products, salts of condensation products of naphthalenesulphonic acid, phenolsulphonic acid and formaldehyde. Examples of anionic surfactants d) from the group of condensation products of formaldehyde with Naphthalinsulfonates Galoryl^{®} DT 201 (Naphthalinsulf oic acid with hydroxy polymer Formaldeyd and methyl phenol sodium salt), Galoryl^{®} DT 250 (condensation product of phenol and naphthalene), Reserve^{®} C (Condensation product of phenol and naphthalene), Morwet^{®} D-425 (Akzo-Nobel) and Tersperse^{®} D-2020 (Huntsman) as each naphthalene-formaldehyde condensate. unsubstituted Naphthalinsulf are preferred onatformaldehykondensate, including product Morwet^{®} D-425. Examples of lignin are for example available calcium, potassium, ammonium or sodium lignin sulfonates such as Reax^{®} 88, Kraftsperse^{®} 25S (Westvaco) as well as types Borresperse^{®} (Borregard).

E) are emulsifiers and dispersants different from d) and f). Suitable are alkali-, Earthalkali- or Ammoniumsalts of Sulfonaten, Sulfaten, Phosphaten, Carboxylaten and mixtures as well as Alkylsulphonic acids and Alkylphosphoric acids and Alkylarylsulphon- oder Alkylarylphosphor acid, Diphenylsulfonate, alpha-Olefinsulfonate, Ligninsulfonate, Sulfonate from fatty acids and oil, Sulfonates of ethoxylated alkylphenols, sulfonates of alkoxylated arylphenols, sulfonates of dodecyl and tridecylbenzenes, sulfosuccinates or sulfosuccinamates. Examples of sulfates and sulfonates are sulfates of fatty acids and oils, of ethoxylated alkylphenols, of alcohols, of ethoxylated alcohols or of fatty acid esters. Examples of phosphates are phosphate esters. Examples of carboxylates are alkylcarboxylates and carboxylated alcohol or alkylphenol ethoxylates. Also suitable is the group of anionic emulsifiers of the alkali metal, alkaline earth metal and ammonium salts of polystyrene sulfonic acids, salts of polyvinylsulphonic acids. Examples are calcium dodecylbenzenesulfonate such as Rhodocal^{®} 70 / B (Solvay), phenylsulfonate CA100 (Clariant) or isopropylammonium dodecylbenzenesulfonates such as Atlox^{®} 3300B (Croda). Other typical representatives include phenylsulfonate CA (Ca-dodecylbenzenesulfonate), Soprophor^{®} types (optionally esterified derivatives of tristyrylphenoxy ethoxylates), Emulsogen^{®} 3510 (alkylated EO / PO copolymer), Emulsogen^{®} EL 400 (ethoxylated castor oil), Tween^{®} grades (fatty acylated sorbitan ethoxylates), Calsogen^{®} AR 100 (calcium dodecylbenzenesulfonate). Further typical surfactants e) are Soprophor^{®} 3D33, Soprophor^{®} 4D384, Soprophor^{®} BSU, Soprophor^{®} CY / 8 (Solvay) and Hoe^{®} S3474 and in the form of the Sapogenat^{®} T products (Clariant), for example Sapogenat^{®} T 100. Suitable nonionic dispersants e), such as emulsifiers, wetting agents, surfactants and dispersants, are customary surface-active substances present in formulations of agrochemical active compounds. Examples which may be mentioned are ethoxylated nonylphenols, reaction products of linear or branched alcohols with ethylene oxide and / or propylene oxide, ethylene oxide-propylene oxide block copolymers, end-capped and non-end-capped alkoxylated linear and branched, saturated and unsaturated alcohols (eg butoxypolyethylenepropylene glycols), reaction products of alkylphenols with ethylene oxide and / or propylene oxide, ethylene oxide-propylene oxide block copolymers, polyethylene glycols and polypropylene glycols, furthermore fatty acid esters, fatty acid polyglycol ether esters, alkyl sulfonates, alkyl sulfates, aryl sulfates, ethoxylated arylalkylphenols such as tristyrylphenol ethoxylate having an average of 16 ethylene oxide units per molecule, further ethoxylated and propoxylated arylalkylphenols and sulfated or phosphated arylalkylphenol ethoxylates or ethoxy and propoxylates. Particularly preferred are tristrylphenol alkoxylates and fatty acid polyglycol ether esters. Very particular preference is given to tristyrylphenol ethoxylates, tristyrylphenolethoxypropoxylates and castor oil polyglycol ether esters, in each case individually or in mixtures. Suitable nonionic dispersants e) can also be selected from the group comprising polyvinylpyrrolidone (PVP), polyvinyl alcohol, co-polymer of PVP and dimethylaminoethyl methacrylate, butylated PVP, co-polymer of vinyl chloride and vinyl acetate, and partially hydrolyzed vinyl acetate, phenolic resins, modified cellulose Types such as Luviskol^{®} (polyvinylpyrrolidone), Mowiol^{®} (polyvinyl alcohol) or modified cellulose. Preferred are polyvinylpyrrolidone types, particularly preferred are low molecular weight types such as Luviskol^{®} K30 or Sokalan^{®} K30. Other nonionic emulsifiers e) which are preferably used are selected from the group of di- and tri-block copolymers of alkylene oxides. Suitable compounds based on ethylene oxide and propylene oxide with average molecular weights of between 200 and 10,000, preferably between 1000 and 4000 g / mol, the mass fraction of the polyethoxylated block varying between 10 and 80%, such as e.g. Synperonic^{®} PE series (Uniqema), Pluronic^{®} PE series (BASF), VOP^{®} 32 or Genapol^{®} PF series (Clariant).

### DEFINITION f)

Further additives comprised in the formulations according to the invention f) are penetration enhancers Suitable are all substances that can usually be used in agrochemicals for this purpose.

As additives f) are suitable, for example
oils that function as penetration promoters, suitable oils are all substances of this type which can customarily be employed in agrochemical agents. Preferably, oils of vegetable, mineral and animal origin and alkyl esters of these oils. Examples are:
- sunflower oil, rapeseed oil, corn oil, soybean oil, rice bran oil, olive oil;
- ethylhexyl oleate, ethylhexyl palmitate, ethylhexyl myristate/laurate, ethylhexyl laurate, ethylhexyl caprylate/caprate, iso-propyl myristate, iso-propyl palmitate, methyl oleate, methyl palmitate, ethyl oleate, rape seed oil methyl ester, soybean oil methyl ester, rice bran oil methyl ester,
- Mineral oils, e.g. Exxsol^{®} D100, Solvesso^{®} 200ND, and white oil.
- tris-alkyl-phosphate esters, preferably tris (2-ethylhexyl) phosphate, e.g. Disflamoll^{®} TOF;
   The uptake enhancer may also be selected from the following group of compounds:
   i. ethoxylated branched alcohols (e.g. Genapol^{®} X-type) with 2-20 EO units;
   ii. methyl end-capped, ethoxylated branched alcohols (e.g. Genapol^{®} XM-type) comprising 2-20 EO units;
   iii. ethoxylated coconut alcohols (e.g. Genapol^{®} C-types) comprising 2-20 EO units;
   iv. ethoxylated C12/15 alcohols (e.g. Synperonic^{®} A-types) comprising 2-20 EO units;
   v. propoxy-ethoxylated alcohols, branched or linear, e.g. Antarox^{®} B/848, Atlas^{®} G5000, Lucramul^{®} HOT 5902;
   vi. propoxy-ethoxylated fatty acids, Me end-capped, e.g. Leofat^{®} OC0503M;
   vii. alkyl ether citrate surfactants (e.g. Adsee^{®} CE range, Akzo Nobel);
   viii. ethoxylated mono- or diesters of glycerine comprising fatty acids with 8-18 carbon atoms and an average of 10-40 EO units (e.g. Crovol^{®} range);
   ix. castor oil ethoxylates comprising an average of 5-40 EO units (e.g. Berol^{®} range, Emulsogen^{®} EL range).
   x. ethoxylated oleic acid (e.g. Alkamuls^{®} A and AP) comprising 2-20 EO units;
   xi. ethoxylated sorbitan fatty acid esters comprising fatty acids with 8-18 carbon atoms and an average of 10-50 EO units (e.g. Arlatone^{®} T, Tween range).
as well as methyl-terminated propoxy-ethoxylated fatty acids, e.g. Leofat^{®} OC0503M;
Organomodified polysiloxanes, e.g. BreakThru^{®} OE444, BreakThru^{®} S240, Silwett^{®} L77, Silwett^{®} 408;
Monoesters and diesters of sulphosuccinate-Na salts with branched or linear alcohols having 1-10 carbon atoms;
Ethoxylated diacetylenediols (e.g., Surfynol^{®}).

**Table: Exemplary trade names and CAS numbers of preferred compounds f)**

| **trade name** | **company** | **chemistry description** | CAS-**Nr.** |
|---|---|---|---|
| Lucramul^{®} HOT 5902 | Levaco | Alkoholethoxylat -propoxylat (C8-PO8/EO6) | 64366-70-7 |
| Genapol^{®} X060 | Clariant | Alkoholethoxylat (iso-C13-EO6) | 9043-30-5 |
| Genapol^{®} XM 060 | Clariant | Alkoholethoxylat (iso-C13-EO6/mit Me-Endgruppe) | 345642-79-7 |
| Triton^{®} GR 7 ME | Dow | Dioctylsulfosuccinat, Natrium-salz | 577-11-7 |
| BreakThru^{®} OE 444 | Evonik Industries | Siloxane und Silicone, Cetyl-Me, Di-Me | 191044-49-2 |
| BreakThru^{®} S240 | Evonik Industries | Polyethermodifiziertes Trisiloxan | 134180-76-0 |
| Silwett^{®} L77 | Momentive | Polyalkylenoxidmodifiziertes Heptamethyltrisiloxan | 67674-67-3 |
| Silwett^{®} 408 | Momentive | Polyalkylenoxidmodifiziertes Heptamethyltrisiloxan | 67674-67-3 |
| Antarox^{®} B/848 | Solvay | Oxiran, Methyl-, Polymer mit Oxiran, Monobutylether | 9038-95-3 |
| Atlas^{®} G5000 | Croda | Oxiran, Methyl-, Polymer mit Oxiran, Monobutylether | 9038-95-3 |
| Leofat^{®} OC-0503M | Lion Chemical, JP | Oxiran, Methyl-, Polymer mit Oxiran, Mono-(9Z)-9-octadecenoat, Methylether, Block | 181141-31-1 |
| Surfynol^{®} 440 | Air Products | 2.4.7.9-Tetramethyldec-5-in-4.7-diol, ethoxyliert | 9014-85-1 |

Further optional additives g) such as an rainfastadditive, adhesive, a surfactant, a solvent, a wetting agent, an emulsifying agent, a biocide, a microbicide, a dispersing agent, a thickening agent, a stabilizing agent, a carrier, an adjuvant, a diluent, a fertilizer of a micronutrient or macronutrient nature, a feeding inhibitor, an insect molting inhibitor, an insect mating inhibitor, an insect maturation inhibitor, a nutritional or horticultural supplement, or any combination thereof can be used:
As thickener not being c) for g) are preferably organic thickeners in question, these natural or biotechnologically modified or organic synthetic thickeners can be.

Typical synthetic thickeners are Rheostrux^{®} (Croda), Thixin^{®} or Thixatrol^{®} series (Elementis). These are typically based on acrylates. Typical organic thickeners are based on xanthan or cellulose (such as hydroxyethyl or carboxymethylcellulose) or a combination thereof. Preference is given to using natural modified thickeners based on xanthan. Typical representatives are for example Rhodopol^{®} (Solvay) and Kelzan^{®} (Kelco Corp.) as well as Satiaxane^{®} (Cargill).

Further additives and auxiliaries g) are wetting agents, pH adjusters, defoamers, biocides, disintegrating agents, adhesion promoters, antifreeze agents, preservatives, dyes or fertilizers, as well as surfactants differing from components d, e and f) and c) various fillers, Antifreeze, defoamers and biocides are preferably added.

Suitable rain-fast additives are acrylic based emulsion polymers or polymer dispersions and styrene based emulsion polymers or polymer dispersions b) are aqueous polymer dispersions with a Tg in the range from -100°C to 30°C, preferably between -60°C and 20°C, more preferably between -50°C and 10°C, most preferably between -45°C and 5°C, for example Acronal V215, Acronal 3612, Licomer ADH 205 and Atplus FA. Particularly preferred are Licomer ADH205, and Atplus FA.

Preferably, the polymer is selected from the group consisting of acrylic polymers, styrene polymers, vinyl polymers and derivatives thereof, polyolefins, polyurethanes and natural polymers and derivatives thereof.

More preferably, the polymer is selected from the group consisting of acrylic polymers, styrene butadiene copolymers, styrene-maleic anhydride copolymers, polyvinyl alcohol, polyvinyl acetate, partially hydrolysed polyvinyl acetate, methyl vinyl ether-maleic anhydride copolymers, carboxy-modified polyvinyl alcohol, acetoacetyl-modified polyvinyl alcohol, diacetone-modified polyvinyl alcohol and silicon-modified polyvinyl alcohol, isopropylene-maleic anhydride copolymer, polyurethane, cellulose, gelatine, caesin, oxidised starch, starch-vinyl acetate graft copolymers, hydroxyethyl cellulose, methyl cellulose, ethyl cellulose, carboxymethyl cellulose and acetyl cellulose.

Most preferably the polymer is selected from copolymers of an acrylate and a styrene. Said acrylate selected from the list comprising 2-ethyl-hexyl acrylate, butyl acrylate, sec-butyl acrylate, ethyl acrylate, methyl acrylate, acrylic acid, acrylamide, iso-butyl acrylate, methyl methacrylate, or combinations thereof. Said styrene selected from the list comprising styrene, tert-butyl styrene, para-methyl styrene, or combinations thereof.

In a preferred embodiment the polymer, as described above, has a molecular weight of no more than 40000, preferably no more than 10000.

In a preferred embodiment the polymer D is an emulsion polymer as described in WO 2017/202684.

The glass transition temperature (Tg) is known for many polymers and is determined in the present invention, if not definded otherwise, according to ASTM E1356-08 (2014) "Standard Test Method for Assignment of the Glass Transition Temperatures by Differential Scanning Calorimetry" wherein the sample is dried prior to DSC at 110°C for one hour to eliminate effect of water and/or solvent, DSC sample size of 10-15 mg, measured from -100°C to 100°C at 20°C/min under N2, with Tg defined as midpoint of the transition region.

Suitable defoamers are silicone-based or silane-based surface-active compounds such as the Tegopren^{®} products (Goldschmidt), the SE^{®} products (Wacker), as well as the Bevaloid^{®} (Kemira), Rhodorsil^{®} (Solvay) and Silcolapse^{®} products (Blustar Silicones) preferred are SE^{®} (Wacker), Rhodorsil^{®} and Silcolapse^{®} products, particularly preferred are, for example Products like Silcolapse^{®} 5020.

Suitable antifreeze agents are those from the group of ureas, diols and polyols, such as ethylene glycol and propylene glycol, glycerol, preferably propylene glycol or glycerol.

Suitable biocides are e.g. Products such as Acticide^{®} MBS (Biocide, Thor Chemie), CIT, MIT or BIT such as Proxel^{®} GXL (BIT), Acticide^{®} SPX (MIT, CIT).

Suitable adhesion promoters can be selected from the group polyvinylpyrrolidone (PVP), polyvinyl alcohol, co-polymer of PVP and dimethylaminoethyl methacrylate, butylated PVP, co-polymer of vinyl chloride and vinyl acetate, Na salt of the co-polymer of propensulanic acid and partially hydrolyzed vinyl acetate, sodium caseinate, Phenolic resins, modified cellulose types such as Luviskol^{®} (polyvinylpyrrolidone), Mowiol^{®} (polyvinyl alcohol), modified cellulose. Preferred are polyvinylpyrrolidone types, particularly preferred are low molecular weight types such as Luviskol^{®} K30.

Suitable disintegrating agents may be selected from the group of modified carbohydrates, such as microcrystalline cellulose and cross-linked polyvinylpyrrolidones, such as Avicel^{®} PH 101 (microcrystalline cellulose), Agrimer^{®} XLF (crosslinked polyvinylpyrrolidone), Disintex^{®} 200 (crosslinked polyvinylpyrrolidone). Preference is given to cross-linked polyvinylpyrrolidones, such as Agrimer^{®} XLF. Suitable antifoam agents can be selected from the group of esters of phosphoric acid with lower alcohols, C6-C10 alcohols, silicone surfactants (suspoemulsions of hydrophobicized silica particles in aqueous emulsion concentrates based on liquid silicone surfactants), such as polydimethylsiloxane, as well as their adsorbates on solid support material such as Rhodorsil^{®} 432 (silicone surfactant), butyl phosphate, isobutyl phosphate, n-octanol, Wacker ASP15 (polydimethylsiloxane, absorbed on solid support), antifoam agent^{®}SE (polydimethylsiloxane). Preference is given to suspoemulsions of hydrophobized silica particles in aqueous emulsion concentrates based on liquid silicone surfactants, such as antifoam agent SE (polydimethylsiloxane), and solid antifoaming agents, such as Wacker ASP 15 (polydimethylsiloxane). Tackifiers such as carboxymethylcellulose and natural and synthetic polymers in the form of powders, granules or latices, such as gum arabic, polyvinyl alcohol and polyvinyl acetate, as well as natural phospholipids, such as cephalins and lecithins, and synthetic phospholipids, can be used in the formulations. Other possible additives are mineral and vegetable oils.

Colorants such as inorganic pigments, for example iron oxide, titanium oxide and Prussian Blue, and organic dyestuffs, such as alizarin dyestuffs, azo dyestuffs and metal phthalocyanine dyestuffs, and trace nutrients such as salts of iron, manganese, boron, copper, cobalt, molybdenum and zinc, can also be used. Also, one or more of biocides, antifreezes, antifoams, and other inerts or excipients can be included in the final formulation. In an aspect, a composition disclosed herein may comprise one or more biocides and/or microbicides present at a total w/w concentration of 0.001% to 10%, or 0.01% to 1%, or 0.05% to 0.5%.

In an aspect, a composition disclosed herein may comprise one or more thickening or stabilizing agents present at a total w/w concentration of 0.001% to 10%, or 0.05% to 5%, or 0.01% to 1%. Also, an antifoam agent, such as (SAG30, Antifoam 8830), can be used at desired amounts, for example from .001% to 1% by weight of the final composition. Additionally, an antifreeze, such as propylene glycol or glycerine, can be used, for example at 0-20% by weight.

In an aspect, a composition disclosed herein may include one or more additional pesticides h), such as herbicides, insecticides, fungicides, bactericides, acaricides, nematicides or pheromones or other compounds with biological activity. The mixtures thus obtained have a broadened spectrum of activity.

In another aspect, compositions of the present invention comprise one or more gram-negative bacteria and/or one or more members of the bacterial genus *Bacillus.*

Preferred are *Bacillus* species selected from the group consisting of *Bacillus agri, Bacillus aizawai, Bacillus albolactis, Bacillus amyloliquefaciens, Bacillus firmus, Bacillus coagulans, Bacillus endoparasiticus, Bacillus endorhythmos, Bacillus firmus, Bacillus kurstaki, Bacillus lacticola, Bacillus lactimorbus, Bacillus lactis, Bacillus laterosporus, Bacillus lentimorbus, Bacillus licheniformis, Bacillus megaterium, Bacillus medusa, Bacillus metiens, Bacillus natto, Bacillus nigrificans, Bacillus popillae, Bacillus pumilus, Bacillus siamensis, Bacillus sphaericus, Bacillus* spp., *Bacillus subtilis, Bacillus thuringiensis, Bacillus uniflagellatus, Bacillus cereus* and those listed in the category of *Bacillus* Genus in the "Bergey's Manual of Systematic Bacteriology, First Ed. (1986)" alone or in combination.

In an aspect of the invention, the *Bacillus* species is either *B. firmus, B. amyloliquefaciens, B. subtilis,* or *B. thuringiensis.*

In another aspect, a composition disclosed herein may be applied to a plant, a plant part, or a habitat thereof, in combination with one or more compositions comprising further known herbicides, insecticides, fungicides, bactericides, acaricides, nematicides, or pheromones or other compounds with biological activity. In some instances, synergistic effects may be obtained, *i.e.,* the activity of the mixture exceeds the activity of the individual components. Such additional actives can be used in any desired ratios with the succinate dehydrogenase inhibitors of the instant compositions, for example, at weight ratios of 1:100 to 100:1 or 50:1 to 1:50 or 25:1 to 1:25 or 1:10 to 10:1 or 5:1 to 1:5 of SDHI to additional component.

These optional additional compounds and/or compositions can be determined by systematic field trials, which are within the capabilities of a person skilled in the art.

Suitable additional fungicides which can be used in combination with compositions disclosed herein, include, known fungicides, for example:
(1) Inhibitors of the nucleic acid synthesis, for example benalaxyl, benalaxyl-M, bupirimate, clozylacon, dimethirimol, ethirimol, furalaxyl, hymexazol, metalaxyl, metalaxyl-M, ofurace, oxadixyl and oxolinic acid.
(2) Inhibitors of the mitosis and cell division, for example benomyl, carbendazim, chlorfenazole, diethofencarb, ethaboxam, fuberidazole, pencycuron, thiabendazole, thiophanate, thiophanate-methyl and zoxamide.
(3) Inhibitors of the respiration, for example diflumetorim as CI-respiration inhibitor; bixafen, boscalid, carboxin, fenfuram, flutolanil, fluopyram, furametpyr, furmecyclox, isopyrazam (9R-component), isopyrazam (9S-component), mepronil, oxycarboxin, penthiopyrad, thifluzamide as CII-respiration inhibitor; amisulbrom, azoxystrobin, cyazofamid, dimoxystrobin, enestroburin, famoxadone, fenamidone, fluoxastrobin, kresoxim-methyl, metominostrobin, orysastrobin, picoxystrobin, pyraclostrobin, pyribencarb, trifloxystrobin as CIII-respiration inhibitor.
(4) Compounds capable to act as an uncoupler, like for example binapacryl, dinocap, fluazinam and meptyldinocap.
(5) Inhibitors of the ATP production, for example fentin acetate, fentin chloride, fentin hydroxide, and silthiofam.
(6) Inhibitors of the amino acid and/or protein biosynthesis, for example andoprim, blasticidin-S, cyprodinil, kasugamycin, kasugamycin hydrochloride hydrate, mepanipyrim and pyrimethanil.
(7) Inhibitors of the signal transduction, for example fenpiclonil, fludioxonil and quinoxyfen.
(8) Inhibitors of the lipid and membrane synthesis, for example biphenyl, chlozolinate, edifenphos, etridiazole, iodocarb, iprobenfos, iprodione, isoprothiolane, procymidone, propamocarb, propamocarb hydrochloride, pyrazophos, tolclofos-methyl and vinclozolin.
(9) Inhibitors of the ergosterol biosynthesis, for example aldimorph, azaconazole, bitertanol, bromuconazole, cyproconazole, diclobutrazole, difenoconazole, diniconazole, diniconazole-M, dodemorph, dodemorph acetate, epoxiconazole, etaconazole, fenarimol, fenbuconazole, fenhexamid, fenpropidin, fenpropimorph, fluquinconazole, flurprimidol, flusilazole, flutriafol, furconazole, furconazole-cis, hexaconazole, imazalil, imazalil sulfate, imibenconazole, ipconazole, metconazole, myclobutanil, naftifine, nuarimol, oxpoconazole, paclobutrazol, pefurazoate, penconazole, piperalin, prochloraz, propiconazole, prothioconazole, pyributicarb, pyrifenox, quinconazole, simeconazole, spiroxamine, tebuconazole, terbinafine, tetraconazole, triadimefon, triadimenol, tridemorph, triflumizole, triforine, triticonazole, uniconazole, viniconazole and voriconazole.
(10) Inhibitors of the cell wall synthesis, for example benthiavalicarb, dimethomorph, flumorph, iprovalicarb, mandipropamid, polyoxins, polyoxorim, prothiocarb, validamycin A, and valiphenal.
(11) Inhibitors of the melanine biosynthesis, for example carpropamid, diclocymet, fenoxanil, phthalide, pyroquilon and tricyclazole.
(12) Compounds capable to induce a host defence, like for example acibenzolar-S-methyl, probenazole, and tiadinil.
(13) Compounds capable to have a multisite action, like for example bordeaux mixture, captafol, captan, chlorothalonil, copper naphthenate, copper oxide, copper oxychloride, copper preparations such as copper hydroxide, copper sulphate, dichlofluanid, dithianon, dodine, dodine free base, ferbam, fluorofolpet, folpet, guazatine, guazatine acetate, iminoctadine, iminoctadine albesilate, iminoctadine triacetate, mancopper, mancozeb, maneb, metiram, metiram zinc, oxine-copper, propamidine, propineb, sulphur and sulphur preparations including calcium polysulphide, thiram, tolylfluanid, zineb and ziram.
(14) Further compounds like for example 2,3-dibutyl-6-chlorothieno[2,3-d]pyrimidin-4(3H)-one, ethyl (2Z)-3-amino-2-cyano-3-phenylprop-2-enoate, N-[2-(1,3-dimethylbutyl)phenyl]-5-fluoro-1,3-dimethyl-1H-pyrazole-4-carboxamide, N-{2-[1,1'-bi(cyclopropyl)-2-yl]phenyl}-3-(difluoromethyl)-1-methyl-1H-pyrazole-4-carboxamide, 3-(difluoromethyl)-1-methyl-N-(3',4',5'-trifluorobiphenyl-2-yl)-1H-pyrazole-4-carboxamide, 3-(difluoro-methyl)-N-[4-fluoro-2-(1,1,2,3,3,3-hexafluoropropoxy)phenyl]-1-methyl-1H-pyrazole-4-carboxamide, (2E)-2-(2-{[6-(3-chloro-2-methylphenoxy)-5-fluoropyrimidin-4-yl]oxy}-phenyl)-2-(methoxyimino)-N-methylethanamide, (2E)-2-{2-[({[(2E,3E)-4-(2,6-dichloro-phenyl)but-3-en-2-ylidene]amino}oxy)methyl]phenyl}-2-(methoxyimino)-N-methylethanamide, 2-chloro-N-(1,1,3-trimethyl-2,3-dihydro-1H-inden-4-yl)pyridine-3-carboxamide, N-(3-ethyl-3,5,5-trimethylcyclohexyl)-3-(formylamino)-2-hydroxybenzamide, 5-methoxy-2-methyl-4-(2-{[({(1E)-1-[3-(trifluoromethyl)phenyl]ethylidene}amino)oxy]methyl}phenyl)-2,4-dihydro-3H-1,2,4-triazol-3-one, (2E)-2-(methoxyimino)-N-methyl-2-(2-{[({(1E)-1-[3-(trifluoromethyl)phenyl]ethylidene}amino)oxy]methyl}phenyl)ethanamide, (2E)-2-(methoxyimino)-N-methyl-2-{2-[(E)-({1-[3-(trifluoromethyl)phenyl]ethoxy}-imino)methyl]phenyl} ethanamide, (2E)-2- {2-[({[(1E)-1-(3-{[(E)-1-fluoro-2-phenyl-ethenyl]oxy}phenyl)ethylidene]amino}oxy)methyl]phenyl}-2-(methoxyimino)-N-methylethanamide, 1-(4-chlorophenyl)-2-(1H-1,2,4-triazol-1-yl)cycloheptanol, methyl 1-(2,2-dimethyl-2,3-dihydro-1H-inden-1-yl)-1H-imidazole-5-carboxylate, N-ethyl-N-methyl-N'-{2-methyl-5-(trifluoromethyl)-4-[3-(trimethylsilyl)propoxy]phenyl}imidoformamide, N'-{5-(difluoromethyl)-2-methyl-4-[3-(trimethylsilyl)propoxy]phenyl}-N-ethyl-N-methylimidoformamide, O-{1-[(4-methoxyphenoxy)methyl]-2,2-dimethylpropyl}1H-imidazole-1-carbothioate, N-[2-(4-{[3-(4-chlorophenyl)prop-2-yn-1-yl]oxy}-3-methoxyphenyl)ethyl]-N2-(methylsulfonyl)valinamide, 5-chloro-7-(4-methylpiperidin-1-yl)-6-(2,4,6-trifluorophenyl)[1,2,4]triazolo[1,5-a]pyrimidine, 5-amino-1,3,4-thiadiazole-2-thiol, propamocarb-fosetyl, 1-[(4-methoxyphenoxy)methyl]-2,2-dimethylpropyl 1H-imidazole-1-carboxylate, 1-methyl-N-[2-(1,1,2,2-tetrafluoro ethoxy)phenyl]-3-(trifluoromethyl)-1H-pyrazole-4-carboxamide, 2,3,5,6-tetrachloro-4-(methylsulfonyl)pyridine, 2-butoxy-6-iodo-3-propyl-4H-chromen-4-one, 2-phenylphenol and salts, 3-(difluoromethyl)-1-methyl-N-[2-(1,1,2,2-tetrafluoroethoxy)phenyl]-1H-pyrazole-4-carboxamide, 3,4,5-trichloropyridine-2,6-dicarbonitrile, 3-[5-(4-chlorophenyl)-2,3-dimethylisoxazolidin-3-yl]pyridine, 3-chloro-5-(4-chlorophenyl)-4-(2,6-difluorophenyl)-6-methylpyridazine, 4-(4-chlorophenyl)-5-(2,6-difluorophenyl)-3,6-dimethylpyridazine, quinolin-8-ol, quinolin-8-ol sulfate (2:1) (salt), 5-methyl-6-octyl-3,7-dihydro[1,2,4]triazolo[1,5-a]pyrimidin-7-amine, 5-ethyl-6-octyl-3,7-dihydro[1,2,4]triazolo[1,5-a]pyrimidin-7-amine, benthiazole, bethoxazin, capsimycin, carvone, chinomethionat, chloroneb, cufraneb, cyflufenamid, cymoxanil, cyprosulfamide, dazomet, debacarb, dichlorophen, diclomezine, dicloran, difenzoquat, difenzoquat methylsulphate, diphenylamine, ecomate, ferimzone, flumetover, fluopicolide, fluoroimide, flusulfamide, flutianil, fosetyl-aluminium, fosetyl-calcium, fosetyl-sodium, hexachlorobenzene, irumamycin, isotianil, methasulfocarb, methyl (2E)-2-{2-[({cyclopropyl[(4-methoxyphenyl)imino]methyl}thio)methyl]phenyl}-3-methoxyacrylate, methyl isothiocyanate, metrafenone, (5-bromo-2-methoxy-4-methylpyridin-3-yl)(2,3,4-trimethoxy-6-methylphenyl)methanone, mildiomycin, tolnifanide, N-(4-chlorobenzyl)-3-[3-methoxy-4-(prop-2-yn-1-yloxy)phenyl]propanamide, N-[(4-chlorophenyl)(cyano)-methyl]-3-[3-methoxy-4-(prop-2-yn-1-yloxy)phenyl]propanamide, N-[(5-bromo-3-chloro-pyridin-2-yl)methyl]-2,4-dichloropyridine-3-carboxamide, N-[1-(5-bromo-3-chloropyridin-2-yl)ethyl]-2,4-dichloropyridine-3-carboxamide, N-[1-(5-bromo-3-chloropyridin-2-yl)-ethyl]-2-fluoro-4-iodopyridine-3-carboxamide, N-{(Z)-[(cyclopropylmethoxy)imino][6-(difluoromethoxy)-2,3-difluorophenyl]methyl}-2-phenylacetamide, N-{(E)-[(cyclopropyl-methoxy)imino][6-(difluoromethoxy)-2,3-difluorophenyl]methyl}-2-phenylacetamide, natamycin, nickel dimethyldithiocarbamate, nitrothal-isopropyl, octhilinone, oxamocarb, oxyfenthiin, pentachlorophenol and salts, phenazine-1-carboxylic acid, phenothrin, phosphorous acid and its salts, propamocarb fosetylate, propanosine-sodium, proquinazid, pyrrolnitrine, quintozene, S-prop-2-en-1-yl 5-amino-2-(1-methylethyl)-4-(2-methylphenyl)-3-oxo-2,3-dihydro-1H-pyrazole-1-carbothioate, tecloftalam, tecnazene, triazoxide, trichlamide, 5-chloro-N'-phenyl-N'-prop-2-yn-1-ylthiophene-2-sulfonohydrazide and zarilamid.

Any desired useful plant or crop can be treated by the composition of the present invention to promote the health of the plant.

In an aspect, the composition of the present invention may be used to treat cotton, flax, vine, fruit or vegetable crops such as Vitis sp. (for instance grapes and wine grapes), Citrullus sp. (for instance watermelon), Pistacia sp. (for instance pistachios), Prunus sp. (for instance cherries), Rosaceae sp. (for instance pip fruit such as apples and pears, but also stone fruit such as apricots, almonds and peaches), Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp. (for instance banana trees and plantins). Rubiaceae sp., Theaceae sp., Sterculiceae sp., Rutaceae sp. (for instance lemons, oranges and grapefruit), Solanaceae sp. (for instance tomatoes), Liliaceae sp., Asteraceae sp. (for instance lettuces), Umbelliferae sp., Cruciferae sp., Chenopodiaceae sp., Cucurbitaceae sp., Papilionaceae sp. (for instance peas), Rosaceae sp. (for instance strawberries); major crops such as Graminae sp. (for instance maize, lawn or cereals such as wheat, rice, barley and triticale), Asteraceae sp. (for instance sunflower), Cruciferae sp. (for instance colza), Fabacae sp. (for instance peanuts), Papilionaceae sp. (for instance soybean), Solanaceae sp. (for instance potatoes), Chenopodiaceae sp. (for instance beetroots), horticultural and forest crops; as well as genetically modified homologues of these crops.

Plants are understood as meaning, in the present context, all plants and plant populations, such as desired wild plants or crop plants (including naturally occurring crop plants). Crop plants or crops may be plants which can be obtained by conventional breeding and optimization methods or else by biotechnological and genetic engineering methods or by combinations of these methods, including the transgenic plants and including the plant varieties capable or not capable of being protected by plant breeders' rights.

A composition described herein can be applied to a soil, plant, crop, seed, leaf, or plant part thereof in a single application step. In another aspect, a composition described herein is applied to a plant, crop, seed, leaf, or plant part thereof in multiple application steps, for example, two, three, four, five or more application steps. In another aspect, the second, third, fourth, or fifth or more application steps may be with the same or different compositions. The methods described herein also provide for an aspect where multiple application steps are excluded.

A composition described herein can be applied to a soil, plant, crop, seed, or plant part thereof in one or more application intervals of about 30 minutes, about 1 hour, about 2 hours, about 6 hours, about 8 hours, about 12 hours, about 1 day, about 5 days, about 7 days, about 10 days, about 12 days, about 14 days, about 21 days, about 28 days, about 35 days, about 45 days, about 50 days, or about 56 days.

A composition described herein can be applied to a plant, crop, seed, or plant part thereof one or more times during a growing, planting, or harvesting season. In another aspect, a compound or composition described herein is applied to a plant, crop, seed, or plant part thereof in one, two, three, four, or five or more times during a growing, planting, or harvesting season. In another aspect, a compound or composition described herein is applied to a plant, crop, seed, or plant part thereof only one time, no more than two times, or no more than three times during a growing, planting, or harvesting season. In yet another aspect, a compound or composition is applied in a single step to a seed. In yet another aspect, a seed described herein is planted in a one-pass application step.

In another aspect, the disclosure provides for pre-plant, pre-emergent, post-emergent, application steps or combinations thereof. In another aspect, a compound or composition described herein is first applied in a pre-plant step and followed by one or more pre-emergent or post-emergent steps. In yet another aspect, the disclosure provides for only a pre-plant step.

Methods described herein can be used in the treatment of genetically modified organisms (GMOs), e.g., plants or seeds. Genetically modified plants (or transgenic plants) are plants of which a heterologous gene has been stably integrated into genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using for example, antisense technology, cosuppression technology or RNA interference - RNAi - technology). A heterologous gene that is located in the genome is also called a transgene. A transgene that is defined by its particular location in the plant genome is called a transformation or transgenic event.

In an aspect, plants can be obtained by traditional breeding and optimization methods or by biotechnological and recombinant methods, or combinations of these methods, including the transgenic plants and including the plant varieties which are capable or not capable of being protected by Plant Breeders' Rights.

In another aspect, plant species and plant varieties which are found in the wild or which are obtained by traditional biological breeding methods, such as hybridization or protoplast fusion, and parts of these species and varieties are treated. In another embodiment, transgenic plants and plant varieties which were obtained by recombinant methods, if appropriate in combination with traditional methods (genetically modified organisms) and their parts are treated.

"Plant parts" should be understood as meaning all above ground and subsoil parts and organs of plants, such as shoot, leaf, flower, root, leaves, needles, stalks, stems, fruiting bodies, fruits and seeds, tubers and rhizomes. Plant parts also include harvested crops, and also vegetative and generative propagation material, for example cuttings, tubers, rhizomes, slips and seeds.

Seeds, plant parts, leaves, and plants may be treated with the described compositions by applying the compounds or compositions directly to the seed, plant part, leaf, or plant. In another aspect, the seed, plant part, leaf, or plant may be treated indirectly, for example by treating the environment or habitat in which the seed, plant part, leaf, or plant is exposed to. Conventional treatment methods may be used to treat the environment or habitat including dipping, spraying, fumigating, chemigating, fogging, scattering, brushing on, shanking or injecting.

"Habitat" denotes where a plant or crop is growing or where a plant or crop will be grown. The composition can be used to treat the plant, crop, or habitat thereof.

According to the invention, the treatment of the plants and seeds with a composition described herein can be carried out directly by the customary treatment methods, for example by immersion, spraying, vaporizing, fogging, injecting, dripping, drenching, broadcasting or painting, and seed treatment.

A composition described herein can take any of a variety of dosage forms including, without limitation, suspension concentrates, aerosols, capsule suspensions, cold-fogging concentrates, warm-fogging concentrates, encapsulated granules, fine granules, flowable concentrates for the treatment of seed, ready-to-use solutions, dustable powders, emulsifiable concentrates, oil-in-water emulsions, water-in-oil emulsions, macrogranules, microgranules, oil-dispersible powders, oil-miscible flowable concentrates, oil-miscible liquids, foams, pastes, pesticide-coated seed, suspoemulsion concentrates, soluble concentrates, wettable powders, soluble powders, dusts and granules, water-soluble granules or tablets, water-soluble powders for the treatment of seed, wettable powders, natural products and synthetic substances impregnated with a compound or composition described herein, a net impregnated with a compound or composition described herein, and also microencapsulations in polymeric substances and in coating materials for seed, and also ULV cold-fogging and warm-fogging formulations.

These compositions include not only compositions which are ready to be applied to the plant or seed to be treated by means of a suitable device, such as a spraying or dusting device or drones, but also concentrated commercial compositions which must be diluted before they are applied to the crop.

The pesticidal compositions of the present invention can be used to curatively or preventively control phytopathogenic fungi on crops, but also to curatively or preventively control nematodes and/or insects.

The composition according to the present invention is well tolerated by plants, have favorable homeotherm toxicity and are environmentally friendly; it is suitable for protecting plants and plant organs, for increasing harvest yields, for improving the quality of the harvested material and for controlling animal pests, in particular insects, arachnids and nematodes encountered in agriculture, in forests, in gardens and leisure facilities, in the protection of stored products and materials and in the hygiene sector. It is preferably used as crop protection agents. It is active against normally sensitive and resistant species and against all or some stages of development. Among the animal pests that can also be controlled by the method according to the present invention, mention may be made of:

The plant-parasitic nematodes such as species of the genera *Aphelenchoides* spp., *Bursaphelenchus* spp., *Ditylenchus* spp., *Globodera* spp., *Heterodera* spp., *Longidorus* spp., *Meloidogyne* spp., *Pratylenchus* spp., *Radopholus* spp., *Trichodorus* spp., *Tylenchulus* spp, *Xiphinema* spp., *Helicotylenchus* spp., *Tylenchorhynchus* spp., *Scutellonema* spp., *Paratrichodorus* spp., *Meloinema* spp., *Paraphelenchus* spp., *Aglenchus* spp., *Belonolaimus* spp., *Nacobbus* spp, *Rotylenchulus* spp., *Rotylenchus* spp., *Neotylenchus* spp., *Paraphelenchus* spp., *Dolichodorus* spp., *Hoplolaimus* spp., *Punctodera* spp., *Criconemella* spp., *Quinisulcius* spp., *Hemicycliophora* spp., *Anguina* spp., *Subanguina* spp., *Hemicriconemoides* spp., *Psilenchus* spp., *Pseudohalenchus* spp., *Criconemoides* spp., *Cacopaurus* spp..

Thus, according to a further aspect of the present invention, there is provided a method for preventively or curatively controlling phytopathogenic fungi of crops but also to curatively or preventively control nematode pests, characterized in that an effective and non-phytotoxic amount of a composition as hereinbefore defined is applied in the area where the nematodes are to be controlled.

The composition according to the present invention may also be used against pests and diseases liable to grow on or inside timber. The term "timber" means all types of species of wood, and all types of working of this wood intended for construction, for example solid wood, high-density wood, laminated wood, and plywood. The method for treating timber according to the invention mainly consists in contacting one or more compounds of the present invention, or a composition according to the invention; this includes for example direct application, spraying, dipping, injection or any other suitable means.

The expression "effective and non-phytotoxic amount" means an amount of composition according to the invention which is sufficient to control or destroy the pests and/or diseases present or liable to appear on the crops, and which does not entail any appreciable symptom of phytotoxicity for the crops. Such an amount can vary within a wide range depending on the pests and diseases to be combated or controlled, the type of crop, the climatic conditions and the compounds included in the composition according to the invention.

This amount can be determined by systematic field trials, which are within the capabilities of a person skilled in the art.

Compositions described herein can be combined with a fertilizer. Examples of fertilizers capable of being used with the compositions and methods described herein include, for example, urea, ammonium nitrate, ammonium sulfate, calcium nitrate, diammonium phosphate, monoammonium phosphate, triple super phosphate, potassium nitrate, potassium nitrate, nitrate of potash, potassium chloride, muriate of potash, di- and mono- potassium salts of phosphite/phosphonate and other NPK fertilizers such as 10-34-0, 6-24-6, or the like. The fertilizer compositions may also include micronutrients including Zn, Co, Mo, Mn, and the like.

The following examples serve to illustrate certain aspects of the disclosure and are not intended to limit the disclosure.

### EXAMPLES

All tests were performed after customary in crop protection CIPAC methods (CIPAC = Collaborative International Pesticides Analytical Council; www.cipac.org). The long-term storage was carried out 40 °C Storage time after CIPAC MT 46.3. Storage time and temperature as indicated in the tables. The particle size was measured using CIPAC MT 187 testing method for agrochemicals. D90 particle size, crystal growth out which increases.

### General preparation of the suspension concentrate:

The active ingredients and formulation inerts were added without any special order. The mixture was pregrinded using a rotar stator until a particle size of 80-150 µm was achieved. The mixture was further grinded using a bead mill until the final particle size of 2-10 µm was achieved. The thickener xanthan gum was added at the end to adjust the final viscosity. In a preferred embodiment the penetration enhancer is added after milling.

### Used materials:

Difenoconazole: DMI fungicide, Syngenta
Fluopyram: SDHI fungicide, Bayer AG
Benecel KM 200: hydroxypropylmethyl cellulose ether, Ashland
Aerosil R-972: hydrophobic modified hydrodisperse silica, Evonik
Aerosil 200: hydrophilic hydrodisperse silica, Evonik
Morwet D-425: Naphthalinsulfonic acid, formaldehyde polymerisate, Akzo Nobel
Synperonic PE/F 127: EO-PO-Ether, Croda
Soprophor 4D384: Tristyrol-ethoxylate, ammoniumsalt, Solvay
Geropon T 36: polycarboxylate-sodium salt of Maleic anhydride and 2,4,4-trimethylpentene polymer, Solvay
Atplus FA: binder, Croda
Crovol CR 70 G: ethoxylated rapeseed oil, Croda
KATHON CG/ICP: biocide, Rhom and Haas
Proxel GXL: biocide, Lonza
Rhodopol 23: xanthan gum, Solvay
SAG 1572: defoamer, Momentive
Silcolapse 426 R: defoamer, Solvay

**Table 1: examples R3, R13, R14 and R29 in % w/w**

| | comparison | comparison | comparison | invention |
|---|---|---|---|---|
| **Material Name** | **R-3** | **R-13** | **R-14** | **R-29** |
| | **%w/w** | **%w/w** | **%w/w** | **%w/w** |
| **Difenoconazole Technical** | **10,8** | 10,8 | 10,8 | 10,8 |
| **Fluopyram Technical** | **21,6** | 21,6 | 21,6 | 21,6 |
| **Benecel KM 200** | 0 | 0 | 0,15 | 0,2 |
| **Aerosil R-972** | 0 | 0 | 0 | 0,6 |
| **Aerosil 200** | 0 | 0 | 0 | 0 |
| **MORWET D-425** | 1,0 | 1,5 | 1,5 | 1,5 |
| **SYNPERONIC PE/F 127** | 2,0 | 2,5 | 2,5 | 2,5 |
| **SOPROPHOR 4D 384** | 1 | 0,5 | 0,5 | 0,5 |
| **GEROPON T 36** | 0,5 | 0,5 | 0,5 | 0,5 |
| **ATPLUS FA** | 0 | 3,54 | 3,54 | 3,54 |
| **CROVOL CR70G** | 0 | 9 | 9 | 9 |
| **GLYCERIN** | 9 | 8 | 8 | 8 |
| **KATHON CG/ICP** | 0,08 | 0,08 | 0,08 | 0,08 |
| **PROXEL GXL 20%** | 0,18 | 0,18 | 0,18 | 0,18 |
| **RHODOPOL 23** | 0,04 | 0,04 | 0,04 | 0,04 |
| **SAG 1572** | 0,2 | 0,3 | 0,3 | 0 |
| **Silcolapse 426 R** | 0 | 0 | 0 | 0,5 |
| **Water** | add to 100 | add to 100 | add to 100 | add to 100 |
| | **R-3** | **R-13** | **R-14** | **R-29** |
| **Appearance 0 day** | flowable white suspension | flowable white suspension | flowable white suspension | flowable white suspension |
| **Appearance 14 days 45°C** | **flowable white suspension** | two phases, separation, settlement | two phases, separation, settlement | flowable after mixing |
| **Appearance 4 weeks 40°C** | flowable white suspension | 50% separation, but flowable after mixing | flowable after mixing | flowable after mixing |
| **particle size d90 in µm 0 day** | 4,51 | 4,87 | 5,42 | 3,93 |
| **particle size d90 in µm 14 days 45°C** | | 8,67 | 8,67 | 7,93 |
| **relative increase vs. 0 day in %** | | 178 | 160 | 202 |
| **particle size d90 in µm 4 weeks 40°C** | 4,5 | 13,1 | 13,7 | 9,56 |
| **relative increase vs. 0 day in %** | 0 | 269 | 253 | 243 |
| **particle size d90 in µm 4 weeks 45°C** | | 11,5 | 13,5 | 11,3 |
| **relative increase vs. 0 day in %** | | 236 | 249 | 288 |
| **agglomerates 0 day** | absent | absent | absent | absent |
| **agglomerates 14 days 45°C** | | present | present | present |
| **agglomerates 4 weeks 40°C** | absent | present | present | present |

**R3 is an example without the penetration enhancer** f. The amounts of dispersant d) and e) was slightly modified to match the final viscosity. There was no particle size growth observed and no agglomerates were present during accelerated storage. However, in view of biological performance of this formulation a penetration enhancer f) is needed, since cuticle penetration is unsufficient as can be seen below (Table 3).

**R14 was made based on the combination of a hydroxypropylmethlycellulose ether (Benecel K 200M)** and xanthan gum as thickener as described by WO2015124330 for Fluoxypyroxad based fungicide formulations. However, the formulation was not stable, there were two phases and separation of the solids though the particle size growth was acceptable. R13 without the used a additional Benecel K 200M was even worse than R15.

**R29 was using additionally Aerosil R 972 as crystal growth inhibiting carrier material. Though the** particle size was slightly higher than R13 and R14, the liquid was flowable after mixing of the stored samples and could be further utilized. However, in comparision to R35, R 36 and R37, it is less preferred adding additional hydroxypropylmethylcellulose ether to the formulation.

**Table 2: examples R30, R35, R36 and R37**

| | invention | invention | invention | invention |
|---|---|---|---|---|
| **Material Name** | **R-30** | **R-35** | **R-36** | **R-37** |
| **Difenoconazole Technical** | 11,35 | 11,35 | 11,35 | 11,35 |
| **Fluopyram Technical** | 21,9 | 21,9 | 21,9 | 21,9 |
| **Benecel KM 200** | 0,2 | 0 | 0 | 0 |
| **Aerosil R-972** | 0 | 0 | 0,6 | 0,6 |
| **Aerosil 200** | 0,6 | 0,6 | 0 | 0 |
| **MORWET D-425** | 1,5 | 1,5 | 1,5 | 1,5 |
| **SYNPERONIC PE/F 127** | 2,5 | 2,5 | 2,5 | 2,5 |
| **SOPROPHOR 4D 384** | 0,5 | 0,5 | 0,5 | 0,5 |
| **GEROPON T 36** | 0,5 | 0,5 | 0,5 | 0,5 |
| **ATPLUS FA** | 3,54 | 3,54 | 3,54 | 3,54 |
| **CROVOL CR70G** | 9 | 9 | 9 | 9 |
| **GLYCERIN** | 8 | 8 | 8 | 8 |
| **KATHON CG/ICP** | 0,08 | 0,08 | 0,08 | 0,08 |
| **PROXEL GXL 20%** | 0,18 | 0,18 | 0,18 | 0,18 |
| **RHODOPOL 23** | 0,04 | 0,04 | 0,04 | 0,04 |
| **SAG 1572** | 0 | 0 | 0,5 | 0 |
| **Silcolapse 426 R** | 0,5 | 0,5 | 0 | 0,5 |
| **Water** | add to 100 | add to 100 | add to 100 | add to 100 |
| | **R-30** | **R-35** | **R-36** | **R-37** |
| **Appearance 0 day** | flowable white suspension | flowable white suspension | flowable white suspension | flowable white suspension |
| **Appearance 14 days 45°C** | flowable after mixing | flowable after mixing | flowable after mixing | flowable after mixing |
| **Appearance 4 weeks 40°C** | flowable after mixing | flowable after mixing | flowable after mixing | flowable after mixing |
| **particle size d90 in µm 0 day** | 3,48 | 4,8 | 4,47 | 5,24 |
| **particle size d90 in µm 14 days 45°C** | 7,07 | 7,06 | 5,74 | 7,4 |
| **relative increase vs. 0 day in %** | 203 | 147 | 128 | 141 |
| **particle size d90 in µm 4 weeks 40°C** | 9,72 | 7,13 | 5,74 | 8,08 |
| **relative increase vs. 0 day in %** | 279 | 149 | 128 | 154 |
| **particle size d90 in µm 4 weeks 45°C** | 10,7 | 7,27 | 6,25 | 10,1 |
| **relative increase vs. 0 day in %** | 307 | 151 | 140 | 193 |
| agglomerates 0 day | absent | absent | absent | absent |
| **agglomerates 14 days 45°C** | present | absent | absent | present |
| **agglomerates 4 weeks 40°C** | present | absent | absent | present |

R 30 is using Aerosil 200 (hydrophilic silica) in comparison to R29. The crystal growth is also quite high, however, the formulation stays flowable after storage. However, same as R 29 this formulation contains hydroxypropylmethylcellulose ether and is less preferred.

R35-R37 are preferred formulations as the crystal growth is very low and the formulation stays fluid without separation or sediment upon accelerated storage.

### Evaluation of bioavailability/penetration enhancement

A spray mixture (0.5 g of active ingredient / L) is added to each of three apple cuticles. The amount of active substance in the cuticle is measured; after drying after 0, 24 and 72 h determined by HPLC.

**Table 3: Penetration of Fluopyram through apple cuticle in wt.-%**

| Example | Cuticle Penetration 24h in % |
|---|---|
| R-3 (comparison) | 8 |
| R-35 | 40 |

The penetration enhancer shows more than 4 times more penetration of the active ingredient.

## Claims

1. Agrochemical composition comprising:
a) at least one SDHI fungicide,
b) at least one DMI fungicide,
c) at least one crystal growth inhibiting carrier c1) and optionally at least one further crystal growth inhibitor c2 and/or c3),
d) at least one ionic dispersant selected from sulfonates based on lignin and/or naphathalen as well as their polymeric condensates,
e) at least one further emulsifiers and/or dispersant different from d) ,
f) at least one penetration enhancer,
g) optionally further additives such as colorants, thickener, defoamer, anti-freeze,
h) optionally further pestides different from a) and b), and
i) water to 100%.

2. Composition according to claim 1 **characterized in that** component a) is selected from the group comprising fluopyram and isoflupyram.

3. Composition according to claim 1 or 2 **characterized in that** component b) is difenoconazole.

4. Composition according to one of the preceeding claims **characterized in that** the components a) and b) have a combined melding point of 50-90°C.

5. Composition according to one of the preceeding claims **characterized in that** the composition comprises one crystal growth inhibiting carrier c1) and one crystal growth inhibiting carrier c2).

6. Composition according to one of the preceeding claims **characterized in that** the composition comprises one crystal growth inhibiting carrier c1), one crystal growth inhibiting carrier c2), and one crystal growth inhibiting carrier c3).

7. Composition according to one of the preceeding claims **characterized in that** the composition comprises component g) as mandatory component.

8. Composition according to one of the preceeding claims **characterized in that** the sum of a) and b) and optionally further pesticides is from 15-80% by weight.

9. Composition according to one of the preceeding claims **characterized in that** the compounds a) and b) are present in a ratio of 4: 1 to 1:2.

10. Composition according to one of the preceeding claims **characterized in that** c1) is selected from the group of clays, minerals and synthetic silicas,

11. Composition according to one of the preceeding claims **characterized in that** c2) is selected from the group of polymeric surfactants or a combination of polymeric surfactants.

12. Composition according to one of the preceeding claims **characterized in that** the components are present in
a) 2-80 % by weight,
b) 2-50 % by weight,
c1) 0.1-10 % by weight,
c2) 0.1-8 % by weight
d) 0.2-5 % by weight,
e) 0.5-10 % by weight,
f) 3-25 % by weight,
g) 0-12 % by weight,
h) 0-20 % by weight,
i) to 100.

13. Composition according to one of the preceeding claims **characterized in that** the components are present in
a) 2-80% by weight
b) 2-50% by weight
c1) 0.1-10% by weight
c2) 0.1-8 % by weight
d) 0.2-5 % by weight
e) 0.5-10 % by weight
f) 3-25 % by weight
g) 0.1-10 % by weight
h) 0-15 % by weight
i) to 100.

14. Composition according to one of the preceeding claims **characterized in that** the components are present in
a) 10-30% by weight
b) 8-20 % by weight
c1) 0.4-1.5% by weight
c2) 0.4-1.5 % by weight
d) 0.8-2 % by weight
e) 2-4 % by weight
f) 7-11 % by weight
g) 1-6 % by weight
h) 0-15 % by weight
i) to 100.

15. Composition according to one of the preceeding claims **characterized in that** the components are present in
a) 10-30% by weight
b) 8-20 % by weight
c1) 0.4-1.5% by weight
c2) 0.4-1.5 % by weight
c3) 0.1-1 % by weight
d) 0.8-2 % by weight
e) 2-4 % by weight
f) 7-11 % by weight
g) 1-6 % by weight
h) 0-15 % by weight
i) to 100.

16. A method of controlling fungi, wherein an effective amount of a composition according to claims 1 to 15 is applied to the plants, parts of the plants, the seed or the area in which the plants grow.

17. Use of a composition according to claims 1-15 for controlling fungi in useful plants.
